# EUROPEAN PATENT APPLICATION

(11) **EP 4 180 762 A1**
(43) Date of publication of application: **17.05.2023**
(21) Application number: 21842698.9
(22) Date of filing: 26.05.2021
(51) Int. Cl.: G01B 11/25, H04N 5/232

(54) **INFORMATION PROCESSING DEVICE, INFORMATION PROCESSING METHOD, AND PROGRAM**

(30) Priority: 13.07.2020 JP 2020119710
(71) Applicant: Sony Group Corporation, Minato-Ku, Tokyo, 108-0075 (JP)
(72) Inventor: TOKUNAGA, Makoto Daniel, Tokyo 108-0075 (JP)
(74) Representative: MFG Patentanwälte Meyer-Wildhagen Meggle-Freund Gerhard PartG mbB
(86) International application number: PCT/JP2021/019935
(87) International publication number: WO 2022/014171

(57) **Abstract**

It is desirable to provide a technique capable of estimating a three-dimensional shape of an object surface with higher definition.

Provided is an information processing apparatus including: a depth information estimating unit that estimates first depth information on the basis of a first detected position of irradiation light by an irradiator, the first detection position being output from a first sensor that detects a position where a luminance change greater than or equal to a first threshold value has occurred; and an integrated processing unit that estimates three-dimensional information on the basis of the first depth information and position and orientation information of the first sensor at each of a plurality of times.

## Description

### TECHNICAL FIELD

The present disclosure relates to an information processing apparatus, an information processing method, and a program.

### BACKGROUND ART

In recent years, a technique for estimating a three-dimensional shape of an object surface existing in a real space on the basis of data detected by a sensor is known. For example, a technique is disclosed in which an object surface is irradiated with a pattern by light, and a three-dimensional shape of the object surface is estimated on the basis of a change in the pattern obtained from a detection result by a sensor of the irradiated pattern (See, for example, Patent Document 1.).

### CITATION LIST

### PATENT DOCUMENT

Patent Document 1: US 2017/0,003,121 A

### SUMMARY OF THE INVENTION

### PROBLEMS TO BE SOLVED BY THE INVENTION

However, it is desirable to provide a technique capable of estimating a three-dimensional shape of an object surface with higher definition.

### SOLUTIONS TO PROBLEMS

According to an aspect of the present disclosure, there is provided an information processing apparatus including: a depth information estimating unit that estimates first depth information on the basis of a first detection position of irradiation light by an irradiator, the first detection position being output from a first sensor that detects a position where a luminance change greater than or equal to a first threshold value has occurred; and
an integrated processing unit that estimates three-dimensional information on the basis of the first depth information and position and orientation information of the first sensor at each of a plurality of times.

Furthermore, according to another aspect of the present disclosure, there is provided an information processing method including: estimating first depth information on the basis of a first detection position of irradiation light by an irradiator, the first detection position being output from a first sensor that detects a position where a luminance change greater than or equal to a first threshold value has occurred; and estimating, by a processor, three-dimensional information on the basis of the first depth information and position and orientation information of the first sensor at each of a plurality of times.

Furthermore, according to another aspect of the present disclosure, there is provided a program for causing a computer to function as an information processing apparatus including: a depth information estimating unit that estimates first depth information on the basis of a first detection position of irradiation light by an irradiator, the first detection position being output from a first sensor that detects a position where a luminance change greater than or equal to a first threshold value has occurred; and an integrated processing unit that estimates three-dimensional information on the basis of the first depth information and position and orientation information of the first sensor at each of a plurality of times.

### BRIEF DESCRIPTION OF DRAWINGS

Fig. 1 is a diagram illustrating an example of depth information obtained in a case where an IR camera is used.
Fig. 2 is a diagram illustrating an example of depth information obtained in a case where an IR camera and a DVS camera are used together.
Fig. 3 is a diagram illustrating a configuration example of an information processing system according to a first embodiment of the present disclosure.
Fig. 4 is a diagram illustrating a functional configuration example of the information processing system according to the embodiment.
Fig. 5 is a flowchart illustrating an example of an operation of the information processing system according to the embodiment.
Fig. 6 is a diagram for describing a general example of detecting a position of a configuration element without using the DVS camera.
Fig. 7 is a diagram for describing a detection example of a position of a configuration element by the information processing system according to the embodiment.
Fig. 8 is a diagram for describing a detection example of a position of a configuration element by the information processing system according to the embodiment.
Fig. 9 is a diagram illustrating a configuration example of an information processing system according to a second embodiment of the present disclosure.
Fig. 10 is a diagram illustrating a functional configuration example of the information processing system according to the embodiment.
Fig. 11 is a flowchart illustrating an example of an operation of the information processing system according to the embodiment.
Fig. 12 is a diagram illustrating a configuration example of an information processing system according to a third embodiment of the present disclosure.
Fig. 13 is a diagram illustrating a functional configuration example of the information processing system according to the embodiment.
Fig. 14 is a flowchart illustrating an example of an operation of the information processing system according to the embodiment.
Fig. 15 is a block diagram illustrating a hardware configuration example of an information processing apparatus.

### MODE FOR CARRYING OUT THE INVENTION

Hereinafter, preferred embodiments of the present disclosure will be described in detail with reference to the accompanying drawings. Note that, in the present specification and the drawings, configuration elements having substantially the same functional configuration are denoted by the same signs, and redundant description is omitted.

Furthermore, in the present specification and the drawings, a plurality of configuration elements having substantially the same or similar functional configurations may be distinguished by attaching different numbers after the same signs. However, in a case where it is not particularly necessary to distinguish each of a plurality of configuration elements having substantially the same or similar functional configuration, only the same sign is attached. Furthermore, similar configuration elements of different embodiments may be distinguished by adding different alphabets after the same signs. However, in a case where it is not necessary to particularly distinguish each of similar configuration elements, only the same sign is assigned.

Note that the description will be given in the following order.
0. Overview
1. First embodiment
   1.1. System configuration example
   1.2. Functional configuration example
   1.3. Functional details
   1.4. Summary of first embodiment
2. Second embodiment
   2.1. System configuration example
   2.2. Functional configuration example
   2.3. Functional details
   2.4. Summary of second embodiment
3. Third embodiment
   3.1. System configuration example
   3.2. Functional configuration example
   3.3. Functional details
   3.4. Summary of third embodiment
4. Hardware configuration example
5. Various modification examples

### <0. Overview>

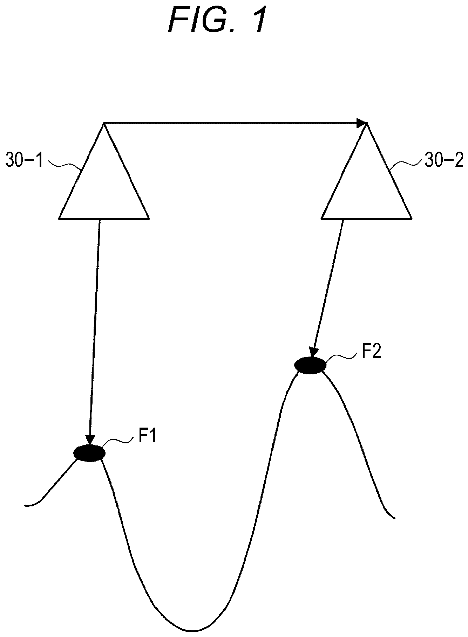

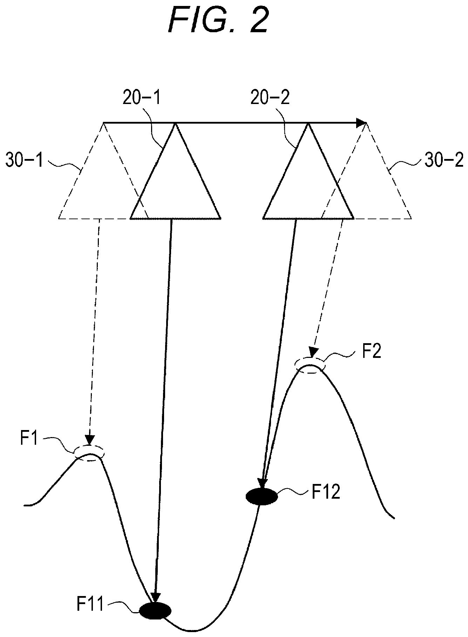

First, an outline of an embodiment of the present disclosure will be described with reference to Figs. 1 and 2. In recent years, a technique for estimating a three-dimensional shape (Hereinafter, the shape is also simply referred to as a "three-dimensional shape".) of an object surface existing in a real space on the basis of data detected by a sensor is known.

For example, there is known a technique (so-called structured light method) of irradiating an object surface with a pattern with light (for example, infrared light and the like) and obtaining depth information (Hereinafter, the depth map is also referred to as a "depth map".) of the object surface on the basis of a change in a pattern obtained from a detection result by a sensor of the irradiated pattern. Also in the structured light method, the depth information of the object surface can be estimated by triangulation on the basis of a detection result of the pattern by the sensor (camera) and a positional relationship between an irradiator and the sensor. The pattern is constituted by a combination of a plurality of irradiation lights (a plurality of configuration elements) irradiated by the irradiator.

Furthermore, there is known a technique (so-called Active Stereo method) of estimating depth information of an object surface irradiated with irradiation light by triangulation on the basis of a positional relationship between an irradiator and a sensor (The sensor is typically a stereo camera.), an irradiation position of the irradiation light by the irradiator (with reference to the irradiator), and a detection position of the irradiation light by the sensor (with reference to the sensor). In such an Active Stereo method, the depth information of the object surface is generally estimated on the assumption that the positional relationship between the irradiator and the sensor is known in advance (That is, it is known.).

Moreover, according to the combination of the Structured Light method and the Active Stereo method, the depth information of the surface of the object irradiated with the pattern can be estimated by triangulation on the basis of the positional relationship between the irradiator and the sensor, the irradiation position (with reference to the irradiator) of the pattern irradiated by the irradiator, and the detection position (with reference to the sensor) of the pattern by the sensor. Then, the depth information at each of the plurality of times is temporally added (combined), whereby the three-dimensional shape of the object surface can be estimated.

### (Case of using normal camera)

Here, as the sensor that detects the pattern, a sensor (Hereinafter, the camera may be referred to as a "normal camera" for convenience of description.) that outputs an entire image (Hereinafter, it is also referred to as a "captured image".) obtained by imaging by the image sensor is generally used. However, since it is necessary to output the entire captured image, the normal camera has a feature that a frame rate does not become too high. An event that may occur in a case where the frame rate is not so large will be described with reference to Fig. 1.

Note that an infrared (IR) camera that outputs a detection result of infrared light will be described below as an example of the normal camera. At this time, the irradiator irradiates the pattern with infrared light. However, the normal camera is not limited to an IR camera. Then, it is sufficient that the irradiator can also irradiate the pattern with light in a wavelength band that can be detected by the normal camera.

Fig. 1 is a diagram illustrating an example of depth information obtained in a case where the IR camera is used. Here, for example, it is assumed that the IR camera 30 and the irradiator (not illustrated) are moved together manually by the user. Referring to Fig. 1, an IR camera 30-1 is illustrated at a timing, and an IR camera 30-2 is illustrated after movement of the IR camera 30-1. The IR camera 30-2 obtains a frame next to a frame (captured image) obtained by the IR camera 30-1. That is, the IR camera 30-1 and the IR camera 30-2 obtain two consecutive frames.

First, the IR camera 30-1 detects a pattern with which an object surface F1 is irradiated by an irradiator (not illustrated) on the basis of the captured frame. Then, the depth information of the object surface F1 is estimated on the basis of the pattern detected by the IR camera 30-1. Subsequently, the IR camera 30-2 after the movement of the IR camera 30-1 detects a pattern irradiated on the object surface F2 by an irradiator (not illustrated). Then, the depth information of the object surface F2 is estimated on the basis of the pattern detected by the IR camera 30-2.

However, as described above, the IR camera 30 as an example of a normal camera has a feature that the frame rate does not become too high because it is necessary to output the entire captured image. Therefore, in the time from when the frame is obtained by the IR camera 30-1 to when the frame is obtained by the IR camera 30-2, an event that depth information of the object surface cannot be obtained (That is, depth information of the object surface between the object surface F1 and the object surface F2 cannot be obtained.) may occur.

Furthermore, the IR camera 30 omits depth information for a time period during which no frame can be obtained, which may cause an event that a three-dimensional shape of the object surface cannot be estimated with high definition. Therefore, it is also conceivable to reduce the object surface on which the depth information cannot be obtained by reducing a moving speed between the IR camera 30 and the irradiator (not illustrated). However, even if the moving speed of the IR camera 30 is reduced, an event that it takes time to obtain depth information in a desired range (That is, the depth information cannot be obtained at high speed.) may occur.

### (In a case where DVS camera is used)

Therefore, in the embodiment of the present disclosure, a technique capable of estimating the depth information of the object surface at a higher speed is mainly proposed. Specifically, a sensor (first sensor) that detects a position (pixel position) where a luminance change greater than or equal to a threshold value (first threshold value) has occurred in a captured image, instead of the entire captured image, is known. In the embodiment of the present disclosure, the depth information (first depth information) is estimated on the basis of the detection position by the sensor (of the irradiation light by the irradiator (not illustrated)).

Such a sensor outputs only a position where a luminance change greater than or equal to a threshold value occurs as compared with a sensor that outputs the entire image, and thus has a feature that an output speed (transfer speed) of a detection result is high (That is, the frame rate is high.). Therefore, according to such a configuration, the depth information of the object surface can be estimated at a higher speed. Furthermore, the three-dimensional shape of the object surface can be estimated with high accuracy on the basis of the depth information of the object surface.

As an example of a sensor that detects a position where a luminance change greater than or equal to a threshold value occurs in a captured image, a sensor called a dynamic vision sensor (DVS) is known. Therefore, in the following, a description will be given of a case where a DVS (Hereinafter, it is also referred to as a "DVS camera".) is used as an example of a sensor that detects a position where a luminance change greater than or equal to a threshold value has occurred in a captured image.

Note that the DVS camera detects whether or not a luminance change greater than or equal to a threshold value occurs for every pixel. In a case where the DVS camera detects a pixel in which a luminance change greater than or equal to a threshold value has occurred, the DVS camera may output an event that the luminance change greater than or equal to the threshold value has occurred in the pixel.

For example, in a case where the DVS camera detects a pixel whose luminance has increased by a threshold value or more, the DVS camera outputs, as an event, the position of the pixel, the time (time stamp t(k)) at which the pixel has been detected, and a value indicating the increase in luminance as a gradient of the luminance change. Specifically, in a case where a pixel starts to be newly irradiated with light by an irradiator (immediately after the irradiation light moves from another pixel, immediately after the irradiation light newly appears, or the like), luminance greater than or equal to a threshold value may increase in the pixel.

On the other hand, in case that the DVS camera detects a pixel whose luminance has decreased by a threshold value or more, the DVS camera outputs, as an event, the position of the pixel, the time (time stamp t(k)) at which the pixel has been detected, and a value indicating a decrease in luminance as a gradient of the luminance change. Specifically, in a case where a pixel is no longer irradiated with light by an irradiator (immediately after the irradiation light moves to another pixel, immediately after the irradiation light newly disappears, or the like), luminance greater than or equal to a threshold value may decrease in the pixel.

In this manner, the change in the irradiation light for every pixel (movement of the irradiation light between the pixel and another pixel, appearance of the irradiation light on the pixel, disappearance of the irradiation light from the pixel, and the like) can be detected by the DVS camera as a luminance increase greater than or equal to the threshold value and a luminance decrease greater than or equal to the threshold value, and can be output as an event. Therefore, by observing the event output by the DVS camera and associating the event with the irradiation light, it is possible to track the irradiation light.

Fig. 2 is a diagram illustrating an example of depth information obtained in a case where an IR camera and a DVS camera are used together. Here, for example, it is assumed that an IR camera 30, a DVS camera 20, and the irradiator (not illustrated) are moved together manually by the user. Referring to Fig. 2, similarly to Fig. 1, the IR camera 30-1 is illustrated at a timing, and the IR camera 30-2 is illustrated after movement of the IR camera 30-1. Otherwise, referring to Fig. 2, the DVS camera 20-1 and the DVS camera 20-2 at the timing between the IR camera 30-1 and the IR camera 30-2 are illustrated.

In the example illustrated in Fig. 2, detection by the DVS camera 20-1 is followed by detection by the DVS camera 20-2. That is, after the depth information of an object surface F1 is estimated on the basis of a frame obtained by the IR camera 30-1, the depth information of an object surface F11 is estimated on the basis of a position where the luminance change (greater than or equal to a threshold value) detected by the DVS camera 20-1 has occurred. Thereafter, the depth information of an object surface F12 is estimated on the basis of a position where the luminance change (greater than or equal to a threshold value) detected by the DVS camera 20-2 has occurred, and then the depth information of an object surface F2 is estimated on the basis of a frame obtained by the IR camera 30-2.

As in this example, by using the IR camera 30 and the DVS camera 20 in combination, the irradiation light can be tracked by the DVS camera 20 even in a time when a frame cannot be obtained by the IR camera 30. Therefore, even in a time when the frame cannot be obtained by the IR camera 30, the depth information of the object surface can be estimated on the basis of a tracking result of the irradiation light by the DVS camera 20. Therefore, the depth information of the object surface can be estimated faster.

Note that Fig. 2 illustrates an example in which the IR camera 30 is also used together with the DVS camera 20. However, as will be described later, embodiments of the present disclosure may not employ the IR camera 30. As described above, the DVS camera 20 generally has a higher frame rate than the IR camera 30. Therefore, even in a case where the DVS camera 20 is used alone without using the IR camera 30, the depth information of the object surface can be estimated at high speed.

Furthermore, in order to estimate the three-dimensional shape of the object surface, it is necessary to add depth information at each of a plurality of times. However, as illustrated in Fig. 2, in a case where the DVS camera 20 moves, the observed position (that is, the position and orientation of the DVS camera 20) of the irradiation light may change with the lapse of time. Since the depth information is obtained by the DVS camera 20 as a reference ((observation position is a reference), if the depth information at each of a plurality of times is added as it is, a three-dimensional shape expressed on the same world coordinates cannot be obtained.

Therefore, in the embodiment of the present disclosure, the depth information at each of the plurality of times is added after the observation position (That is, the position and orientation of the DVS camera 20) of the irradiation light at each of the plurality of times is taken into consideration. As a result, even in a case where the DVS camera 20 moves, the three-dimensional shape of the object surface can be estimated with high accuracy on the basis of the depth information at each of the plurality of times.

The outline of the embodiments of the present disclosure has been described above.

### <1. First embodiment>

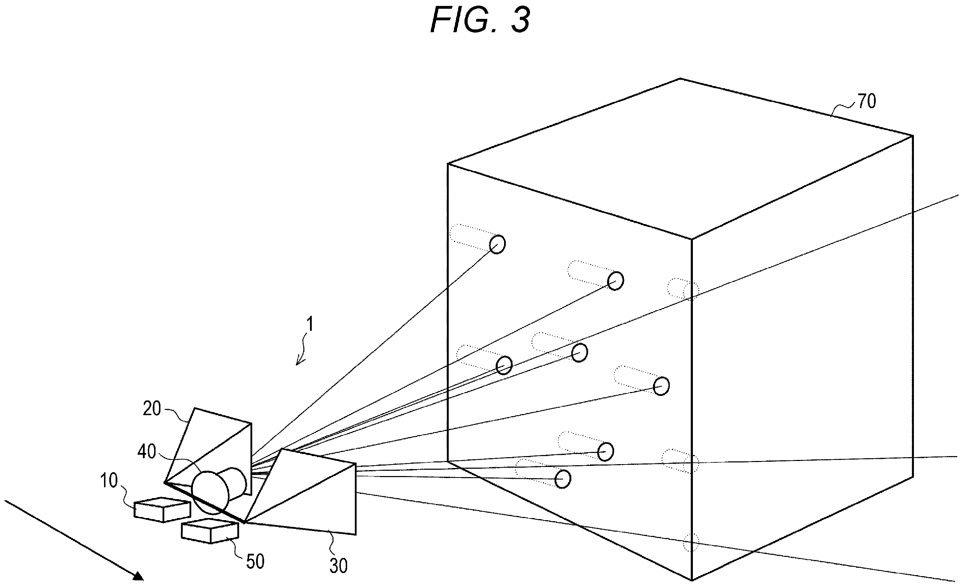

Next, a first embodiment of the present disclosure will be described with reference to Figs. 3 to 8.

### (1.1. System configuration example)

First, a configuration example of an information processing system according to a first embodiment of the present disclosure will be described. Fig. 3 is a diagram illustrating a configuration example of an information processing system according to the first embodiment of the present disclosure. As illustrated in Fig. 3, the information processing system 1 according to the first embodiment of the present disclosure includes an information processing apparatus 10, a DVS camera 20, an IR camera 30, an irradiator 40, and a self-position estimation unit 50.

Here, in the example illustrated in Fig. 3, the information processing apparatus 10, the DVS camera 20, the IR camera 30, the irradiator 40, and the self-position estimation unit 50 are integrated. However, the information processing apparatus 10 may not be integrated with the DVS camera 20, the IR camera 30, the irradiator 40, and the self-position estimation unit 50. Furthermore, referring to Fig. 3, an object 70 existing in a real space is illustrated.

In the example illustrated in Fig. 3, it is assumed that the user causes the information processing system 1 to estimate a shape of the object 70 while manually moving the information processing system 1. However, the movement of the information processing system 1 is not limited to the manual movement of the user. For example, the information processing system 1 may be moved by a robot and the like, or may be provided in a moving body (for example, a vehicle, a person, and the like). Alternatively, as will be described later, the information processing system 1 may be fixed at a predetermined position in the real space (That is, the position of the information processing system 1 may be unchanged.).

Furthermore, in the example illustrated in Fig. 3, the information processing system 1 is moved from left to right on the paper surface, and along with the movement of the information processing system 1, the position of the irradiation light by the irradiator 40 on the object 70 is also moved from left to right on the paper surface. However, the direction in which the information processing system 1 is moved is not particularly limited.

Furthermore, the object 70 whose shape is estimated by the information processing system 1 may have any attribute. For example, in the example illustrated in Fig. 3, the object 70 is an object having a cubic shape. However, the shape of the object 70 is not limited to the cubic shape. Furthermore, the object 70 may be an object having any other attribute (for example, size, color, and the like). Furthermore, the object 70 is not limited to a movable object, and may be an object fixed at the place (for example, a building and the like).

Moreover, the shape estimated by the information processing system 1 may not be an entire shape of the object 70. For example, the shape estimated by the information processing system 1 may be only a shape of a part of the object 70.

The configuration example of the information processing system according to the first embodiment of the present disclosure has been described above.

### (1.2. Functional configuration example)

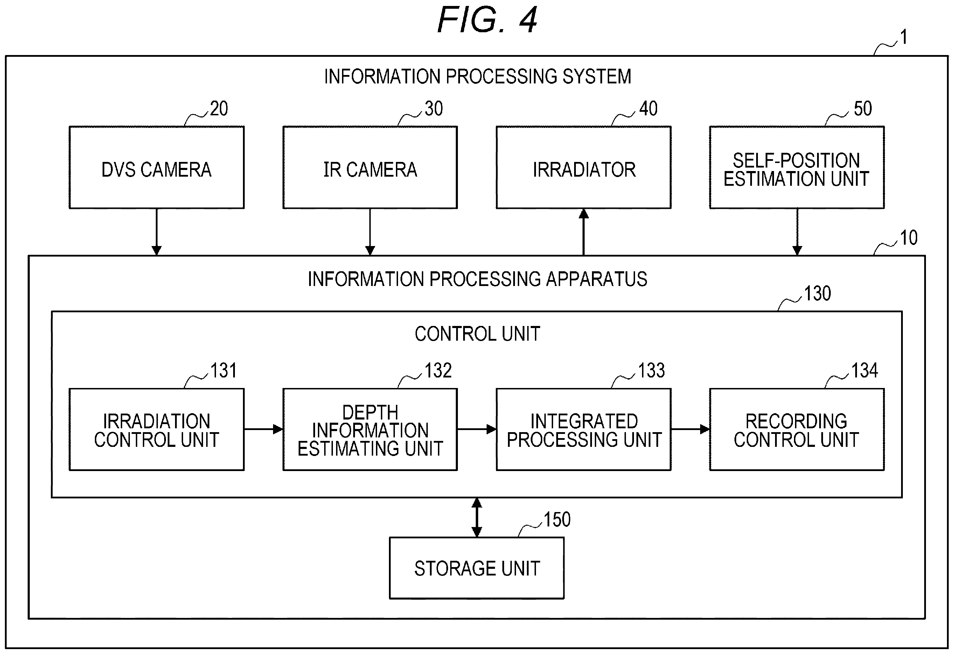

Next, a functional configuration example of the information processing system 1 according to the first embodiment of the present disclosure will be described. Fig. 4 is a diagram illustrating a functional configuration example of the information processing system 1 according to the first embodiment of the present disclosure. As illustrated in Fig. 4, the information processing system 1 according to the first embodiment of the present disclosure includes the information processing apparatus 10, the DVS camera 20, the IR camera 30, the irradiator 40, and the self-position estimation unit 50.

### (Irradiator 40)

The irradiator 40 can be configured by a projector that emits a pattern. The pattern irradiated by the irradiator 40 is configured by a combination of a plurality of configuration elements (a plurality of irradiation lights). The number of configuration elements is not particularly limited. Furthermore, the number of types of patterns may be one or plural. In a case where there is a plurality of types of patterns, one pattern may be selected from among the plurality of types of patterns and irradiated.

In the embodiment of the present disclosure, a case where a pattern (random dot pattern) in which a plurality of dots (points or circles) is scattered is used as the pattern irradiated by the irradiator 40 is mainly assumed. At this time, it is mainly assumed that each of the plurality of configuration elements is configured by a combination of several dots, and can be uniquely identified by an arrangement of several dots. However, the pattern irradiated by the irradiator 40 is not limited to such an example.

For example, a pattern constituted by a plurality of lines or special elements may be used as the pattern irradiated by the irradiator 40. Alternatively, a pattern that can be estimated by corner detection may be used as the pattern irradiated by the irradiator 40. Alternatively, a random color pattern with visible light may be used as the pattern irradiated by the irradiator 40.

Furthermore, in the embodiment of the present disclosure, a case where the irradiator 40 irradiates the pattern with light in an IR wavelength band (infrared light) is mainly assumed. However, a wavelength band of the pattern irradiated by the irradiator 40 is not limited to the IR wavelength band. For example, the wavelength band of the pattern irradiated by the irradiator 40 may be a wavelength band of visible light or the like.

### (DVS Camera 20)

The DVS camera 20 causes an image sensor to receive the pattern irradiated by the irradiator 40 through a lens and a filter, and obtains an electric signal generated by the image sensor on the basis of the received light. Then, the DVS camera 20 obtains a captured image on the basis of the electric signal. As the filter, a filter that passes light in the same wavelength band as the wavelength band of the pattern irradiated by the irradiator 40 may be used. As a result, a captured image (frame) of the pattern irradiated by the irradiator 40 is obtained by the DVS camera 20. It is assumed that a frame rate of the DVS camera 20 is higher than a frame rate of the IR camera 30.

The DVS camera 20 detects a position where a luminance change greater than or equal to a threshold value has occurred in the captured image. As described above, in a case where the DVS camera 20 detects a pixel whose luminance has increased by the threshold value or more, the DVS camera outputs a position of the pixel, time when the pixel has been detected (time stamp t(k)), and a value indicating the increase in luminance as the gradient of the luminance change, as events. On the other hand, in a case where the DVS camera detects a pixel whose luminance has decreased by a threshold value or more, the DVS camera 20 outputs, as an event, a position of the pixel, time when the pixel has been detected (time stamp t(k)), and a value indicating a decrease in luminance as a gradient of the luminance change.

### (IR camera 30)

The IR camera 30 causes the image sensor to receive the pattern irradiated by the irradiator 40 through a lens and a filter, and obtains an electric signal generated by the image sensor on the basis of the received light. Then, the IR camera 30 obtains a captured image on the basis of the electric signal. As the filter, a filter that passes light in the same wavelength band as the wavelength band of the pattern irradiated by the irradiator 40 may be used. As a result, a captured image (frame) of the pattern irradiated by the irradiator 40 is obtained by the DVS camera 20.

In the embodiment of the present disclosure, as described above, it is mainly assumed that a pattern is irradiated with light in an IR wavelength band (infrared light). Therefore, the IR camera 30 may be capable of detecting light in an IR wavelength band (infrared light). However, the IR camera 30 may be appropriately replaced with a camera capable of detecting light in a wavelength band of a pattern emitted by the irradiator 40. For example, in a case where the wavelength band of the pattern irradiated by the irradiator 40 is a wavelength band of visible light, a visible light camera may be used instead of the IR camera 30.

### (Self-position estimation unit 50)

The self-position estimation unit 50 obtains self-position information and self-orientation information (Hereinafter, the "position information" and the "orientation information" are also collectively referred to as "position and orientation information".) by estimating a self-position and a self-orientation. Here, a method of estimating the self-position and the self-orientation by the self-position estimation unit 50 is not limited.

For example, the self-position estimation unit 50 may estimate the self-position (self-position and orientation) in the real space on the basis of a technology called simultaneous localization and mapping (SLAM). For example, in a case where the SLAM is used, a change amount relative to a state (initial state) in which the self-position and orientation are present can be estimated on the basis of detection results of various sensors. As the sensor, a stereo camera or a monocular camera may be used. Such a change amount is obtained as the self-position and orientation in the real space.

Alternatively, the self-position estimation unit 50 may estimate the self-position and orientation in the real space using a stereo camera. For example, in a case where the stereo camera is used, a change amount relative to the initial state of the self-position and orientation can be estimated on the basis of which position a predetermined point in the real space is detected by each of the two cameras and a positional relationship between the two cameras. Such a change amount is obtained as the self-position and orientation in the real space.

Alternatively, the self-position estimation unit 50 may estimate the self-position and orientation in the real space using a monocular camera. For example, in a case where a monocular camera is used, a change amount relative to the initial state of a self-position and orientation can be estimated on the basis of which position a predetermined point in the real space is detected at each of a plurality of positions by the monocular camera and a movement amount between the plurality of positions of the monocular camera. Such a change amount can be estimated as the self-position and orientation in the real space.

Alternatively, the self-position estimation unit 50 may estimate the self-position and orientation in the real space using an inertial measurement unit (IMU). The IMU is an inertial measurement device including an acceleration sensor and an angular velocity sensor, and outputs measured acceleration and angular velocity. For example, in a case where the IMU is used, a change amount relative to the initial state of the self-position and orientation can be estimated by inertial navigation on the basis of the acceleration and the angular velocity. Such a change amount is obtained as the self-position and orientation in the real space.

Note that, in a case where the IMU is used, it can be assumed that the estimation of the self-position and orientation is performed at a higher speed than the imaging of the frame by the IR camera 30 on the basis of the acceleration and the angular velocity. Therefore, in a case where the IMU is used, the self-position and orientation between frames obtained by the IR camera 30 can be directly estimated (without requiring processing such as linear interpolation).

Alternatively, the self-position estimation unit 50 may estimate the self-position and orientation in the real space by combining any two or more of the estimation using the SLAM, the estimation using the stereo camera, the estimation using the monocular camera, and the estimation using the IMU.

Alternatively, as will be described later, the depth information can be estimated by a depth information estimating unit 132. Therefore, the self-position estimation unit 50 can estimate the self-position and orientation by an iterative closest point (ICP) on the basis of depth information estimated by the depth information estimating unit 132. Here, the ICP is an alignment algorithm between point clouds indicated by the depth information at each of a plurality of times. That is, in a case where the ICP is used, it is not necessary to add a sensor for the self-position and orientation. Then, the self-position estimation unit 50 can be incorporated in the information processing apparatus 10.

### (Information processing apparatus 10)

The information processing apparatus 10 is connected to each of the DVS camera 20, the IR camera 30, the irradiator 40, and the self-position estimation unit 50, and performs information processing on the basis of various types of information from the DVS camera 20, the IR camera 30, and the self-position estimation unit 50. Furthermore, the information processing apparatus 10 controls pattern irradiation by the irradiator 40. The information processing apparatus 10 includes a control unit 130 and a storage unit 150.

### (Control unit 130)

The control unit 130 executes control of each unit of the information processing apparatus 10. The control unit 130 includes, for example, one or a plurality of central processing units (CPUs) and the like. In a case where the control unit 130 includes a processing device such as a CPU, the processing device may include an electronic circuit. The control unit 130 can be realized by executing a program by such a processing device. The control unit 130 includes an irradiation control unit 131, the depth information estimating unit 132, an integrated processing unit 133, and a recording control unit 134. Details of these blocks will be described later.

### (Storage unit 150)

The storage unit 150 includes a memory, and is a recording medium that stores a program executed by the control unit 130 and stores data necessary for executing the program. Furthermore, the storage unit 150 temporarily stores data for calculation by the control unit 130. The storage unit 150 includes a magnetic storage device, a semiconductor storage device, an optical storage device, a magneto-optical storage device, and the like.

The functional configuration example of the information processing system 1 according to the first embodiment of the present disclosure has been described above.

### (1.3. Functional details)

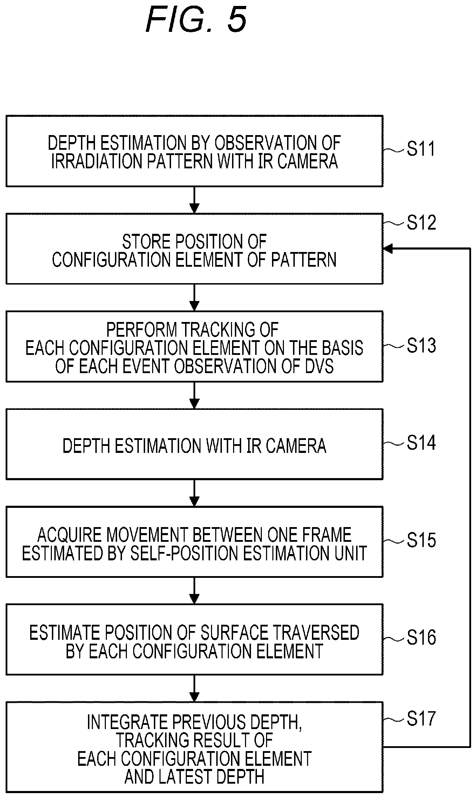

Next, functional details of the information processing system 1 according to the first embodiment of the present disclosure will be described with reference to Fig. 5 (with reference to Figs. 1 to 4 as appropriate). Fig. 5 is a flowchart illustrating an example of an operation of the information processing system 1 according to the first embodiment of the present disclosure.

### (Control of irradiation light)

The irradiation control unit 131 controls the irradiator 40 so that the pattern is irradiated by the irradiator 40. More specifically, the irradiation control unit 131 outputs an irradiation instruction signal for instructing irradiation of a pattern to the irradiator 40. In the first embodiment of the present disclosure, it is mainly assumed that the irradiation control unit 131 controls the irradiator 40 so that the pattern is constantly irradiated by the irradiator 40. However, as described in the following embodiment, the irradiation control unit 131 may control the irradiator 40 so that the switching is performed between irradiation and stop of the pattern.

### (First frame)

The IR camera 30 captures a first frame (captured image) and outputs the captured first frame to the information processing apparatus 10. The depth information estimating unit 132 detects a part or all of the pattern (a plurality of configuration elements) on the basis of the first frame output from the IR camera 30. More specifically, the depth information estimating unit 132 obtains a position of the pixel in which the configuration element is detected in the first frame output from the IR camera 30 as a detection position (third detection position).

The depth information estimating unit 132 estimates depth information (second depth information) of a surface of the object 70 on the basis of the detection position of the configuration element in the first frame output from the IR camera 30 (S11). Hereinafter, the depth information at the time t(n) estimated by the depth information estimating unit 132 on the basis of the first frame output from the IR camera 30 is also expressed as depth D(n). Note that, as described later, the depth information at the time t(m) estimated by the depth information estimating unit 132 on the basis of the second frame output from the IR camera 30 is also expressed as depth D(m).

More specifically, a positional relationship between the IR camera 30 and the irradiator 40 is grasped in advance by the control unit 130. Therefore, the depth information estimating unit 132 can estimate the depth information (depth D(n)) by triangulation on the basis of a detection position of the configuration element in the first frame output from the IR camera 30, an irradiation position (That is, information indicating in which direction the irradiator 40 has irradiated the configuration element with reference to the position of the irradiator 40.) of the configuration element with respect to the irradiator 40, and a positional relationship between the IR camera 30 and the irradiator 40.

The detection position of the configuration element detected in this way is stored in the storage unit 150 (S12). The self-position estimation unit 50 obtains self-position and orientation information by estimating the self-position and orientation at time t(n). Hereinafter, the self-position and orientation information at the time t(n) estimated by the self-position estimation unit 50 is also expressed as Pcamera(n). Note that, as described later, the self-position and orientation information at the time t(m) is also expressed as Pcamera(m).

### (Tracking of configuration elements)

It is assumed that the information processing system 1 is moved by the user while the first frame and the second frame are output from the IR camera 30. At this time, the DVS camera 20 (first sensor) detects whether or not a luminance change of a threshold value (first threshold value) or more has occurred for every pixel. As described above, in a case where the DVS camera 20 detects the pixel in which a luminance change greater than or equal to a threshold value has occurred, the DVS camera outputs a position of the pixel, time (time stamp t(k)) at which the pixel is detected, and a gradient of the luminance change as the event.

The depth information estimating unit 132 observes the event output by the DVS camera 20 and associates the position of the pixel in which the luminance greater than or equal to the threshold value has occurred with the configuration element. As a result, the depth information estimating unit 132 can detect a two-dimensional position of the configuration element in an imaging range of the DVS camera 20 as the detection position (first detection position). The depth information estimating unit 132 can track the two-dimensional position of the configuration element by detecting the two-dimensional position of the configuration element at a plurality of times along time series (S13) .

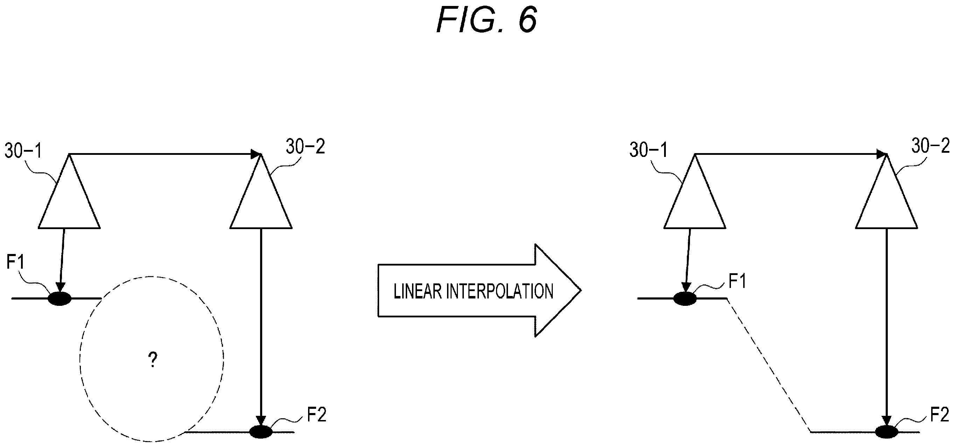

There may be a case where the configuration element is no longer detected during the tracking of the configuration element (a case where the configuration element is lost). Disappearance of such a configuration element will be described with reference to Figs. 6 to 8.

Fig. 6 is a diagram for describing a general example of detecting a position of a configuration element without using the DVS camera 20. Referring to Fig. 6, similar to the example illustrated in Fig. 1, the IR camera 30-1 and the IR camera 30-2 obtain two consecutive frames. Also in the example illustrated in Fig. 6, in the time from when the frame is obtained by the IR camera 30-1 to when the frame is obtained by the IR camera 30-2, an event that depth information of the object surface cannot be obtained (That is, depth information of the object surface between the object surface F1 and the object surface F2 cannot be obtained.) may occur. In the example illustrated in Fig. 6, a point where the depth information cannot be obtained is "? ".

In a case where such an event occurs, as illustrated in Fig. 6, it is general to complement the depth information of the object surface between the object surface F1 and the object surface F2 by approximation by linear interpolation and the like on the basis of the depth information of each of the object surface F1 and the object surface F2. However, since it is expected that a shape of a point where the depth information cannot be obtained varies depending on the object, it is not always appropriate to uniformly perform approximation by linear interpolation for the point where the depth information cannot be obtained.

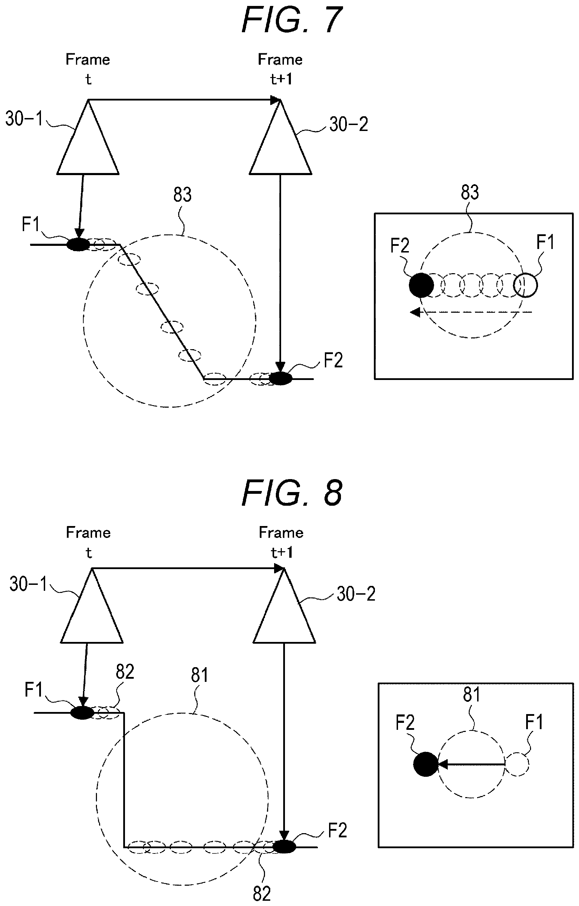

Figs. 7 and 8 are diagrams for explaining an example of detection of a position of a configuration element by the information processing system 1 according to the first embodiment of the present disclosure. In the example illustrated in Fig. 7, since a shape change of the object surface between the object surface F1 and the object surface F2 is gentle, the depth information of the object surface is obtained using the DVS camera 20 even in the time from when the frame is obtained by the IR camera 30-1 to when the frame is obtained by the IR camera 30-2 (also at a detection point 83) (That is, the depth information of the object surface between the object surface F1 and the object surface F2 is obtained.).

On the other hand, in the example illustrated in Fig. 8, since a shape change of the object surface between the object surface F1 and the object surface F2 is rapid, there is a point (disappearance point 81) where the depth information of the object surface cannot be obtained using the DVS camera 20 in the time from when the frame is obtained by the IR camera 30-1 to when the frame is obtained by the IR camera 30-2 (That is, there is a point where depth information of the object surface cannot be obtained between the object surface F1 and the object surface F2.). When the shape change reaches a sudden point (disappearance point 81), the configuration element suddenly disappears and newly appears at a position different from the disappearance point.

The depth information estimating unit 132 detects the disappearance of the configuration elements. More specifically, it is assumed that there is a configuration element in which an event that the luminance has decreased by a threshold value or more has occurred but an event that the luminance has increased by a threshold value or more has not occurred. In such a case, the depth information estimating unit 132 may consider that the configuration element has disappeared. At this time, the depth information estimating unit 132 may detect a position where the luminance has decreased by a threshold value or more as a start position of the disappearance point 81 of the configuration element.

Furthermore, the depth information estimating unit 132 detects the appearance of the configuration element. More specifically, it is assumed that an event that the luminance rises by a threshold value or more occurs as a group of several dots at the same time. In such a case, the depth information estimating unit 132 can detect a position of the group of dots as the appearance position (end position of the disappearance point 81). Note that, at this point, it is not necessary to uniquely identify which configuration element corresponds to the appeared configuration element. These pieces of information regarding the disappearance and appearance can be used for predetermined processing related to the disappearance point 81 as described later.

The depth information estimating unit 132 estimates depth information (first depth information) of the surface of the object 70 on the basis of the two-dimensional position of the configuration element in the imaging range of the DVS camera 20. Note that the depth information at the time t(k) estimated on the basis of the two-dimensional position of the configuration element in the imaging range of the DVS camera 20 is also expressed as a depth D(k). Time t(k) is a time satisfying t(n) < t(m) < t(m).

More specifically, a positional relationship between the DVS camera 20 and the irradiator 40 is grasped in advance by the control unit 130. Therefore, the depth information estimating unit 132 can estimate the depth information (depth D(k)) by triangulation on the basis of the two-dimensional position of the configuration element in the imaging range of the DVS camera 20, the irradiation position (That is, information indicating in which direction the irradiator 40 has irradiated the configuration element with reference to the position of the irradiator 40.) of the configuration element with reference to the irradiator 40, and the positional relationship between the DVS camera 20 and the irradiator 40.

### (Second frame)

The IR camera 30 captures a second frame (captured image) and outputs the captured second frame to the information processing apparatus 10. The depth information estimating unit 132 detects a part or all of the pattern (a plurality of configuration elements) on the basis of the second frame output from the IR camera 30. More specifically, the depth information estimating unit 132 obtains the position of the pixel in which the configuration element is detected in the second frame output from the IR camera 30 as a detection position (third detection position).

At this time, the depth information estimating unit 132 can uniquely identify which configuration element corresponds to each detected configuration element. Therefore, the identification information of the configuration element appearing in the tracking using the DVS camera 20 can be grasped by the identification information of the configuration element obtained on the basis of the second frame. At this time, the depth information estimating unit 132 can also improve the accuracy of tracking using the DVS camera 20 by inversely estimating the position of the configuration element between the frames on the basis of the detection positions of the configuration element based on the first frame and the detection position of the configuration element based on the second frame.

The depth information estimating unit 132 estimates depth information (depth D(m) at time t(m)) of the surface of the object 70 on the basis of the detection positions of the configuration element in the second frame output from the IR camera 30 (S14). More specifically, similarly to the estimation of the depth (n), the depth information estimating unit 132 can estimate the depth information (depth D(m)) by triangulation on the basis of the detection position of the configuration element in the second frame output from the IR camera 30, the irradiation position of the configuration element with reference to the irradiator 40, and the positional relationship between the IR camera 30 and the irradiator 40.

The self-position estimation unit 50 obtains self- position and orientation information (self-position and orientation information Pcamera(m) at time t(m)) by estimating the self-position and orientation at time t(m). Pcamera(m) relative to Pcamera(n) corresponds to movement of the self-position estimation unit 50 between one frame (S15).

### (Estimation of three-dimensional information)

The integrated processing unit 133 needs to perform integration processing on the basis of the depths D(n), D(k), and D(m) to obtain a three-dimensional shape of the object 70. However, as described above, the observation position of the irradiation light may change with the lapse of time during the movement of the information processing system 1. That is, since the depths D(n), D(k), and D(m) are obtained based on observation positions that can change, if the depths D(n), D(k), and D(m) are added as they are, a three-dimensional shape expressed on the same world coordinates cannot be obtained.

Therefore, the integrated processing unit 133 obtains self-position and orientation information Pcamera(k). Here, the self-position and orientation information Pcamera(k) may be obtained in any manner. In the first embodiment of the present disclosure, it is mainly assumed that the integrated processing unit 133 calculates Pcamera(k) by linear interpolation on the basis of times t(n), t(k), t(m), Pcamera(n), and Pcamera(m). However, as described above, in a case where the IMU is used, the Pcamera(k) can be directly estimated (without requiring processing such as linear interpolation).

The integrated processing unit 133 estimates three-dimensional information P(n), P(k), and P(m) on the world coordinates by inverse projection processing on the basis of the depths D(n), D(k), and D(m),and the self-position and orientation information Pcamera(n), Pcamera(k), and Pcamera(m). For example, such three-dimensional information corresponds to the three-dimensional position (three-dimensional position of each configuration element) of the surface of the object 70 irradiated with the irradiation light at each of the times t(n), t(k), and t(m) (S16), and can be expressed as a three-dimensional point group on the same world coordinate.

In a case where the depth D(k) at each of a plurality of times is obtained between the time t(n) and the time t(m), the three-dimensional information P(k) corresponding to each of the plurality of times is obtained.

### (Integration of three-dimensional information)

The integrated processing unit 133 integrates the three-dimensional information estimated in this manner. More specifically, the integrated processing unit 133 integrates the three-dimensional information of each configuration element at each of the times t(n), t(k), and t(m) (S17). As a result, a higher-definition three-dimensional shape of the object surface can be obtained.

As an example, the integrated processing unit 133 can generate a high-definition depth map by adding other three-dimensional information (three-dimensional information of other frames and three-dimensional information obtained by tracking) to a reference depth map generated from three-dimensional information of a reference frame.

For example, the integrated processing unit 133 can generate a high-definition depth map by adding other three-dimensional information (three-dimensional information P(m) of the second frame and three-dimensional information P(k) obtained by tracking) to a depth map to be a reference generated from the three-dimensional information P(n) of the first frame. Note that, to generate such a high-definition depth map, various known techniques related to restoration of super-resolution based on a plurality of images can be applied.

As another example, the integrated processing unit 133 can generate a high-definition three-dimensional shape (mesh representation) by decomposing a corresponding point of Triangle constituting three-dimensional surface information (for example, Triangle Mesh and the like) to be a reference generated from three-dimensional information of a frame to be a reference on the basis of other three-dimensional information (three-dimensional information of other frames and three-dimensional information obtained by tracking).

For example, the integrated processing unit 133 can improve a definition of the surface information by decomposing the corresponding point of the Triangle constituting the three-dimensional surface information (for example, Triangle Mesh and the like) serving as a reference generated from the three-dimensional information P(n) of the first frame on the basis of other three-dimensional information (three-dimensional information P(m) of the second frame and three-dimensional information P(k) obtained by tracking). Note that various known techniques related to reconstruction of surface information can also be applied to generation of such high-definition surface information.

As another example, the integrated processing unit 133 can also generate a high-definition three-dimensional shape by simply adding the three-dimensional information estimated in this manner as a three-dimensional point group. The recording control unit 134 controls the storage unit 150 to store the three-dimensional shape obtained in this manner. When S17 ends, the operation proceeds to S12, and the processing after S12 (processing similar to the processing related to the first and second frames described above) is continuously executed for the second and third frames.

Note that the information regarding the disappearance of the configuration elements obtained in S13 can be used for integration processing in the integrated processing unit 133. For example, in a case where there is a disappearance point 81 (Fig. 8) where no configuration element is detected by the DVS camera 20, the integrated processing unit 133 may execute predetermined processing related to the disappearance point 81.

As an example, the integrated processing unit 133 may perform processing of associating information indicating that the shape is indefinite with the disappearance point (three-dimensional position of the disappearance point) as the predetermined processing related to the disappearance point 81. More specifically, the integrated processing unit 133 may perform processing of associating information indicating that the shape is indefinite with a position corresponding to the disappearance point of the three-dimensional shape stored by the storage unit 150.

According to such a configuration, in a case where there is a point where a three-dimensional shape has not been obtained, if information indicating that the shape is indefinite is associated with the point, it can be grasped that the point is a point where shape estimation has been attempted but shape estimation has not been successful. On the other hand, if the information indicating that the shape is indefinite is not associated with the point where the three-dimensional shape is not obtained, it can be grasped that the point is a point where shape estimation is not attempted.

Alternatively, the integrated processing unit 133 may perform complementary processing of complementing the three-dimensional shape corresponding to the disappearance point 81. Referring to Fig. 8, there is a detection point 82 where a configuration element is detected at a position adjacent to the disappearance point 81. In such a case, the integrated processing unit 133 may perform complementary processing of complementing the three-dimensional shape corresponding to the disappearance point 81 on the basis of the three-dimensional shape corresponding to the detection point 82 as the predetermined processing related to the disappearance point 81. As a result, a point where the shape estimation has not succeeded can be automatically complemented.

More particularly, disappearance of configuration element is believed to be associated with loss of shape (for example, the inclination of the shape) continuity. Therefore, the complementary processing performed by the integrated processing unit 133 may include processing of reducing continuity of the shape. As a result, it is possible to estimate a shape close to a shape of an object that actually exists. Here, the processing of reducing the continuity of the shape is not limited. For example, the complementary processing performed by the integrated processing unit 133 may include processing of estimating the three-dimensional shape corresponding to the disappearance point 81 on the basis of the three-dimensional shape corresponding to the detection point 82.

For example, in a case where the depth map is generated as the three-dimensional shape by the integrated processing unit 133, the shape of the disappearance point 81 may be estimated so that the inclination of the three-dimensional shape corresponding to the detection point 82 and the inclination of the three-dimensional shape corresponding to the disappearance point 81 match the disappearance of the configuration elements. Furthermore, in a case where the surface information (for example, Triangle Mesh and the like) is generated as the three-dimensional shape by the integrated processing unit 133, the shape of the disappearance point 81 may be estimated by determining the pass or fail of the connection of the meshes on the basis of the information regarding the disappearance point 81.

As an example, the complementary processing performed by the integrated processing unit 133 may include processing of estimating an inclination of the three-dimensional shape corresponding to the disappearance point 81 such that an angle formed by an inclination of the three-dimensional shape corresponding to the detection point 82 and the inclination of the three-dimensional shape corresponding to the disappearance point 81 is a predetermined angle or more (90 degrees in the example illustrated in Fig. 8).

Note that adjacent surfaces of objects existing in reality are continuous. Therefore, as illustrated in Fig. 8, the complementary processing performed by the integrated processing unit 133 may include processing of estimating the position of the shape corresponding to the disappearance point 81 such that the position of the three-dimensional shape corresponding to the detection point 82 and the position of the three-dimensional shape corresponding to the disappearance point 81 are continuous.

The functional details of the information processing system 1 according to the first embodiment of the present disclosure have been described above.

### (1.4. Summary of first embodiment)

As described above, in the first embodiment of the present disclosure, the depth information estimating unit 132 estimates the first depth information on the basis of the first detection position of the irradiation light by the irradiator 40 output from the DVS camera 20 that detects the position where the luminance change greater than or equal to the first threshold value has occurred. Then, the integrated processing unit 133 estimates the three-dimensional information on the basis of the first depth information and the position and orientation information of the first sensor at each of the plurality of times.

In particular, in the first embodiment of the present disclosure, the IR camera 30 as an example of a normal camera is also used in combination with the DVS camera 20. More specifically, the depth information estimating unit 132 estimates the second depth information on the basis of the third detection position of the irradiation light by the irradiator 40 detected on the basis of the captured image output from the IR camera 30. Then, the integrated processing unit 133 performs integration processing based on the first depth information and the second depth information.

According to such a configuration, even between a plurality of frames obtained by the IR camera 30, the depth information is obtained using the DVS camera 20. Therefore, according to such a configuration, it is possible to estimate the three-dimensional shape of the object surface with higher definition using the depth information between the plurality of frames. Furthermore, according to such a configuration, since depth information in a wider range can be estimated on the basis of the entire image output from the IR camera 30 as an example of a normal camera, a three-dimensional shape in a wider range can be obtained.

The first embodiment of the present disclosure has been described above.

### <2. Second embodiment>

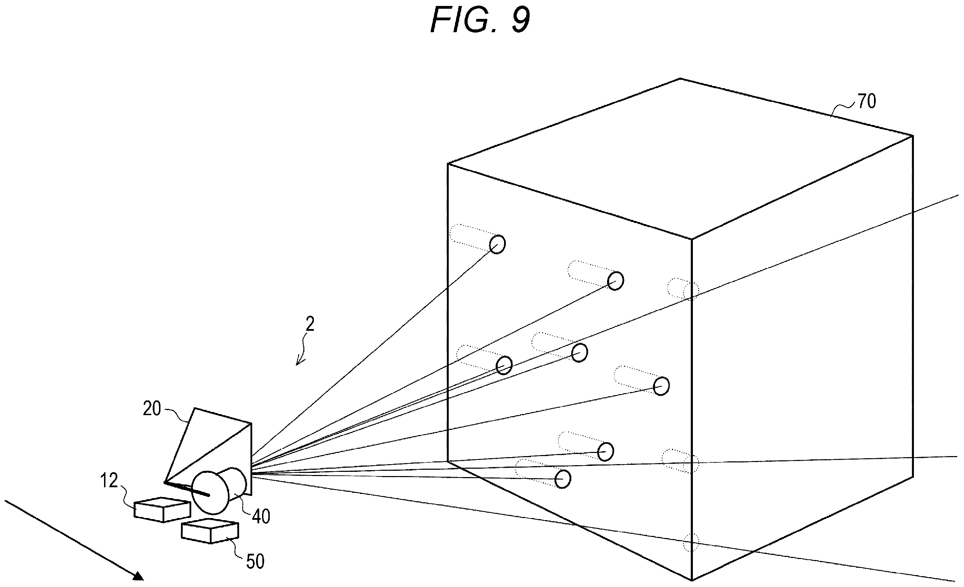

Next, a second embodiment of the present disclosure will be described with reference to Figs. 9 to 11.

### (2.1. System configuration example)

First, a configuration example of an information processing system according to a second embodiment of the present disclosure will be described. Fig. 9 is a diagram illustrating a configuration example of an information processing system 2 according to a second embodiment of the present disclosure. As illustrated in Fig. 9, the information processing system 2 according to the second embodiment of the present disclosure includes a DVS camera 20, an irradiator 40, and a self-position estimation unit 50, similarly to the information processing system 1 according to the second embodiment of the present disclosure. Furthermore, the information processing system 2 according to the second embodiment of the present disclosure includes an information processing apparatus 12 instead of the information processing apparatus 10 according to the first embodiment of the present disclosure.

In the first embodiment of the present disclosure, the case where the DVS camera 20 and the normal camera are used together has been described. In the second embodiment of the present disclosure, it is mainly assumed that only the DVS camera 20 is used for detecting the irradiation light without using the normal camera. However, in a case where only the DVS camera 20 is used for detecting the irradiation light, the depth information is estimated only in a case where a luminance change greater than or equal to a threshold value has occurred. Therefore, it is difficult to obtain three-dimensional information at high speed.

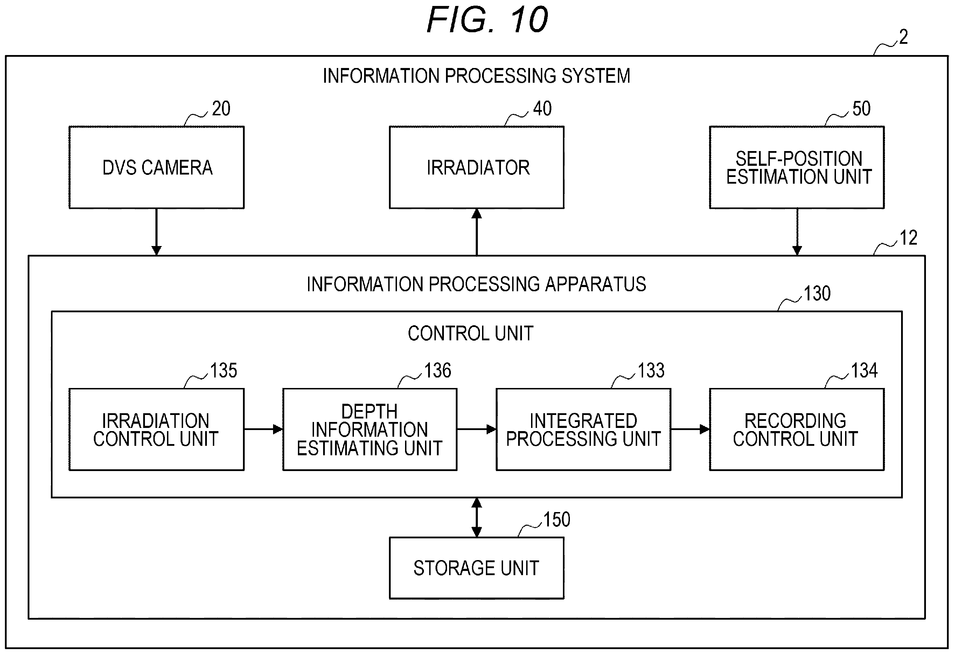

Therefore, in the second embodiment of the present disclosure, an irradiation control unit 135 (Fig. 10) controls the irradiator 40 to switch (that is, blinking) between irradiation (that is, lighting) and stop (that is, light-out) of the irradiation light. As described in the first embodiment of the present disclosure, immediately after the irradiation light newly disappears in a certain pixel, the luminance greater than or equal to a threshold value may decrease in the pixel. On the other hand, immediately after the irradiation light newly appears in a certain pixel, the luminance greater than or equal to a threshold value may increase in the pixel.

That is, the irradiator 40 switches between irradiation and stop of the irradiation light, so that the disappearance and appearance of the irradiation light can be intentionally caused, and the event of the luminance change greater than or equal to the threshold value can be intentionally caused. As a result, the depth information is estimated more frequently on the basis of the position of the pixel where the luminance change greater than or equal to the threshold value has occurred, and thus, it is possible to obtain the three-dimensional information at a higher speed. Furthermore, this eliminates the need to use a normal camera, so that the cost for providing a normal camera can be reduced.

The configuration example of the information processing system 2 according to the second embodiment of the present disclosure has been described above.

### (2.2. Functional configuration example)

Next, a functional configuration example of the information processing system 2 according to the second embodiment of the present disclosure will be described. Fig. 10 is a diagram illustrating a functional configuration example of the information processing system 2 according to the second embodiment of the present disclosure. As illustrated in Fig. 10, an information processing system 2 according to the second embodiment of the present disclosure includes the information processing apparatus 12, a DVS camera 20, the irradiator 40, and a self-position estimation unit 50.

On the other hand, unlike the information processing system 1 according to the first embodiment of the present disclosure, the information processing system 2 according to the second embodiment of the present disclosure does not include the IR camera 30 as an example of a normal camera. The control unit 130 includes the irradiation control unit 135, a depth information estimating unit 136, an integrated processing unit 133, and a recording control unit 134. Hereinafter, the irradiation control unit 135 and the depth information estimating unit 136 will be described in particular detail.

The functional configuration example of the information processing system 2 according to the second embodiment of the present disclosure has been described above.

### (2.3. Functional details)

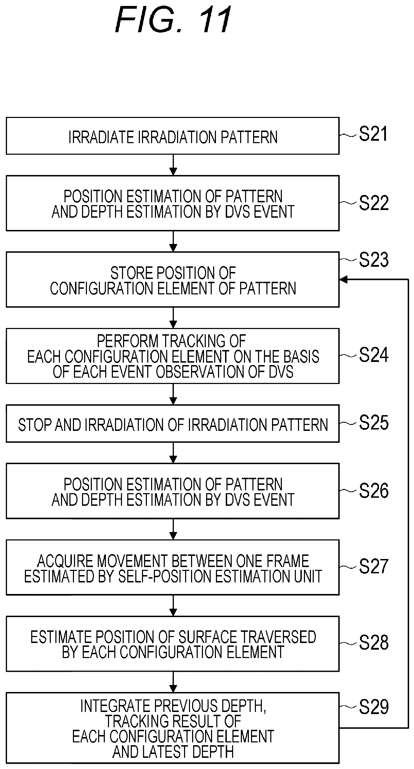

Next, functional details of the information processing system 2 according to the second embodiment of the present disclosure will be described with reference to Fig. 11 (with reference to Figs. 9 and 10 as appropriate). Fig. 11 is a flowchart illustrating an example of an operation of the information processing system 2 according to the second embodiment of the present disclosure.

### (Irradiation with irradiation light)

The irradiation control unit 135 controls the irradiator 40 so that a pattern is irradiated by the irradiator 40 (S21). More specifically, the irradiation control unit 135 outputs an irradiation instruction signal for instructing irradiation of a pattern to the irradiator 40. However, in the second embodiment of the present disclosure, the pattern is stopped later.

### (First frame)

The irradiation of the pattern causes a luminance increase greater than or equal to a threshold value (first threshold value) at the irradiation position. The DVS camera 20 (first sensor) detects whether or not a luminance change of a threshold value (first threshold value) or more has occurred for every pixel. In a case where the DVS camera 20 detects a pixel in which the luminance change greater than or equal to the threshold value has occurred, the DVS camera outputs the position of the pixel, time when the pixel is detected (time stamp t(n)), and a gradient of the luminance change as an event.

The depth information estimating unit 136 observes the event output by the DVS camera 20 and associates the position of the pixel in which the luminance greater than or equal to the threshold value is generated with the configuration element. As a result, the depth information estimating unit 136 can detect a two-dimensional position of the configuration element in an imaging range of the DVS camera 20 as a detection position (first detection position). The depth information estimating unit 136 estimates depth information (depth D(n) at the time t(n)) of a surface of the object 70 on the basis of the detection position of the configuration element in the imaging range of the DVS camera 20 (S22).

The detection position of the configuration element detected in this way is stored in the storage unit 150 (S23). Similarly to the first embodiment of the present disclosure, the self-position estimation unit 50 obtains self-position and orientation information (self- position and orientation information Pcamera(n) at time t(n)) by estimating the-self position and orientation at time t(n).

### (Tracking of configuration elements)

Also in the second embodiment of the present disclosure, as in the first embodiment of the present disclosure, the DVS camera 20 (first sensor) detects whether or not a luminance change of a threshold value (first threshold value) or more has occurred for every pixel. As described above, in a case where the DVS camera 20 detects the pixel in which a luminance change greater than or equal to a threshold value has occurred, the DVS camera outputs a position of the pixel, time (time stamp t(k)) at which the pixel is detected, and a gradient of the luminance change as the event.

The depth information estimating unit 136 observes the event output by the DVS camera 20 and associates the position of the pixel in which the luminance greater than or equal to the threshold value is generated with the configuration element. As a result, the depth information estimating unit 136 can detect a two-dimensional position of the configuration element in an imaging range of the DVS camera 20 as a detection position (first detection position). The depth information estimating unit 136 can track the two-dimensional position of the configuration element by detecting the two-dimensional position of the configuration element at a plurality of times along time series (S24).

There may be a case where the configuration element is no longer detected during the tracking of the configuration element (a case where the configuration element is lost). The processing related to the disappearance of the configuration element may be executed in the similar manner as the processing related to the disappearance of the configuration element in the first embodiment of the present disclosure.

### (Stop and irradiation of irradiation light)

The irradiation control unit 135 controls the irradiator 40 such that the pattern is stopped by the irradiator 40, and controls the irradiator 40 such that the pattern is irradiated by the irradiator 40 (S25). More specifically, the irradiation control unit 135 outputs a stop instruction signal for instructing to stop the pattern to the irradiator 40, and outputs an irradiation instruction signal for instructing to irradiate the pattern to the irradiator 40. Note that, here, it is assumed that the operations in and after S26 are performed after the pattern is stopped and irradiated, but the operations in and after S26 may be performed after only the pattern is stopped.

### (Second frame)

The stop and irradiation of the pattern causes an increase in luminance greater than or equal to the threshold value (first threshold value) at the irradiation position. The DVS camera 20 (first sensor) detects whether or not a luminance change of a threshold value (first threshold value) or more has occurred for every pixel. In a case where the DVS camera 20 detects a pixel in which the luminance change greater than or equal to the threshold value has occurred, the DVS camera outputs the position of the pixel, the time when the pixel is detected (time stamp t(m)), and the gradient of the luminance change as an event.

The depth information estimating unit 136 observes the event output by the DVS camera 20 and associates the position of the pixel in which the luminance greater than or equal to the threshold value is generated with the configuration element. As a result, the depth information estimating unit 136 can detect the two-dimensional position of the configuration element in the imaging range of the DVS camera 20 as the detection position. The depth information estimating unit 136 estimates depth information (depth D(m) at the time t(m)) of the surface of the object 70 on the basis of the detection position of the configuration element in the imaging range of the DVS camera 20 (S26).

Similarly to the first embodiment of the present disclosure, the self-position estimation unit 50 obtains self-position and orientation information (self-position and orientation information Pcamera(m) at time t(m)) by estimating the self-position and orientation at time t(m). Pcamera(m) relative to Pcamera(n) corresponds to movement of the self-position estimation unit 50 between one frame (S27).

### (Estimation of three-dimensional information)

Similarly to the first embodiment of the present disclosure, the integrated processing unit 133 obtains self-position and orientation information Pcamera(k). Then, the integrated processing unit 133 estimates the three-dimensional information P(n), P(k), and P(m) on the world coordinates by the back projection processing on the basis of the depths D(n), D(k), and D(m), and the self-position and orientation information Pcamera(n), Pcamera(k), and Pcamera(m).

### (Integration of three-dimensional information)

Similarly to the first embodiment of the present disclosure, the integrated processing unit 133 integrates the three-dimensional information of each configuration element at each of the times t(n), t(k), and t(m) (S29). As a result, a higher-definition three-dimensional shape of the object surface can be obtained. The recording control unit 134 controls the storage unit 150 to store the three-dimensional shape obtained in this manner. When S29 ends, the operation proceeds to S23, and the processing after S23 (processing similar to the processing related to the first and second frames described above) is continuously executed for the second and third frames.

The functional details of the information processing system 2 according to the second embodiment of the present disclosure have been described above.

### (2.4. Summary of second embodiment)

As described above, in the second embodiment of the present disclosure, the irradiation control unit 135 controls the irradiator 40 to switch between irradiation and stop of the irradiation light. According to such a configuration, the disappearance and appearance of the irradiation light can be intentionally caused, and the event of the luminance change greater than or equal to the threshold value can be intentionally caused. As a result, the depth information is estimated more frequently on the basis of the position of the pixel where the luminance change greater than or equal to the threshold value has occurred, and thus, it is possible to obtain the three-dimensional information at a higher speed. Moreover, according to such a configuration, since it is not necessary to use the normal camera, the cost for providing the normal camera can be reduced.

The second embodiment of the present disclosure has been described above.

### <3. Third embodiment>

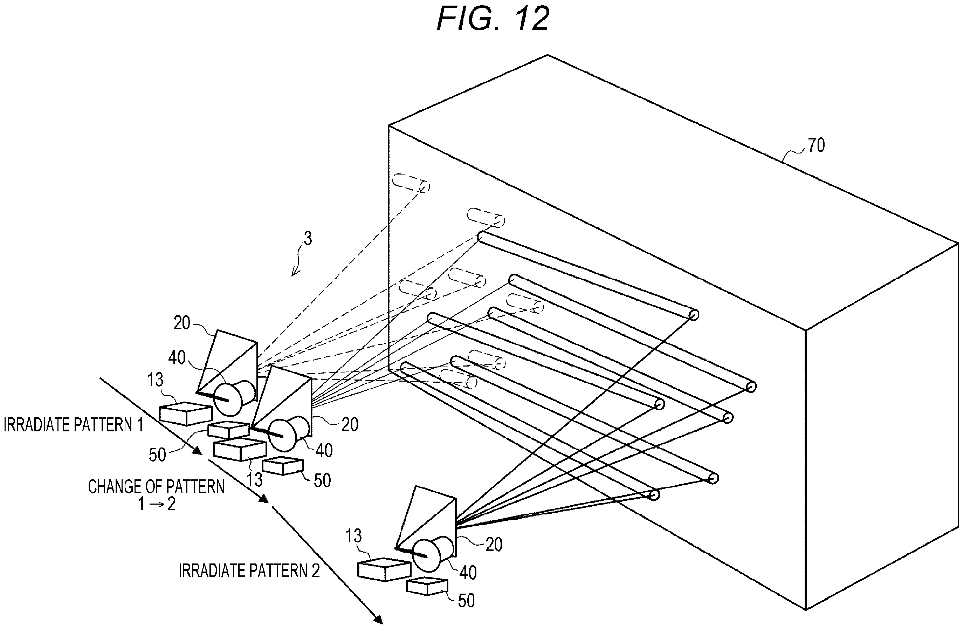

Next, a third embodiment of the present disclosure will be described with reference to Figs. 12 to 14.

### (3.1. System configuration example)

First, a configuration example of an information processing system according to a third embodiment of the present disclosure will be described. Fig. 12 is a diagram illustrating a configuration example of an information processing system 3 according to the second embodiment of the present disclosure. As illustrated in Fig. 12, an information processing system 3 according to the third embodiment of the present disclosure includes a DVS camera 20, an irradiator 40, and a self-position estimation unit 50, similarly to the information processing system 2 according to the second embodiment of the present disclosure. Furthermore, the information processing system 3 according to the third embodiment of the present disclosure includes an information processing apparatus 13 instead of the information processing apparatus 12 according to the second embodiment of the present disclosure.

In the second embodiment of the present disclosure, the case where the irradiation control unit 135 (Fig. 10) controls the irradiator 40 to switch between irradiation and stop of the irradiation light has been described. However, since an event of a change in luminance greater than or equal to a threshold value cannot occur during the time when the irradiation light is stopped, the depth information is not estimated based on the position of the pixel where the change in luminance greater than or equal to the threshold value has occurred.

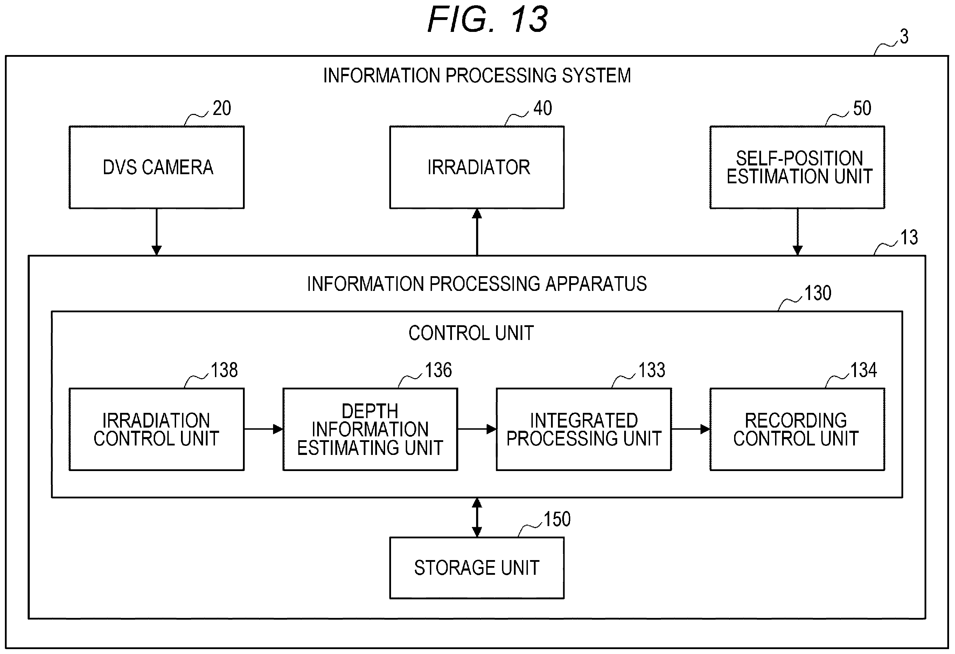

Therefore, in the third embodiment of the present disclosure, an irradiation control unit 138 (Fig. 13) controls the irradiator 40 to switch the irradiation pattern among a plurality of mutually different patterns. As a result, it is possible to increase the time in which the event of the luminance change of the threshold value or more can occur. Then, since the depth information is estimated more frequently on the basis of the position of the pixel where the luminance change greater than or equal to the threshold value has occurred, it is possible to obtain the three-dimensional information at a higher speed. Furthermore, as in the second embodiment of the present disclosure, since it is not necessary to use the normal camera, the cost for providing the normal camera can be reduced.

The configuration example of the information processing system 3 according to the third embodiment of the present disclosure has been described above.

### (3.2. Functional configuration example)

Next, a functional configuration example of the information processing system 3 according to the third embodiment of the present disclosure will be described. Fig. 13 is a diagram illustrating a functional configuration example of the information processing system 3 according to the third embodiment of the present disclosure. As illustrated in Fig. 13, the information processing system 3 according to the third embodiment of the present disclosure includes the information processing apparatus 13, a DVS camera 20, the irradiator 40, and a self-position estimation unit 50.

Similarly to the information processing system 2 according to the second embodiment of the present disclosure, the information processing system 3 according to the third embodiment of the present disclosure does not include the IR camera 30 as an example of a normal camera. The control unit 130 includes the irradiation control unit 138, a depth information estimating unit 136, an integrated processing unit 133, and a recording control unit 134. Hereinafter, the irradiation control unit 135 will be described in particular detail.

The functional configuration example of the information processing system 3 according to the third embodiment of the present disclosure has been described above.

### (3.3. Functional details)

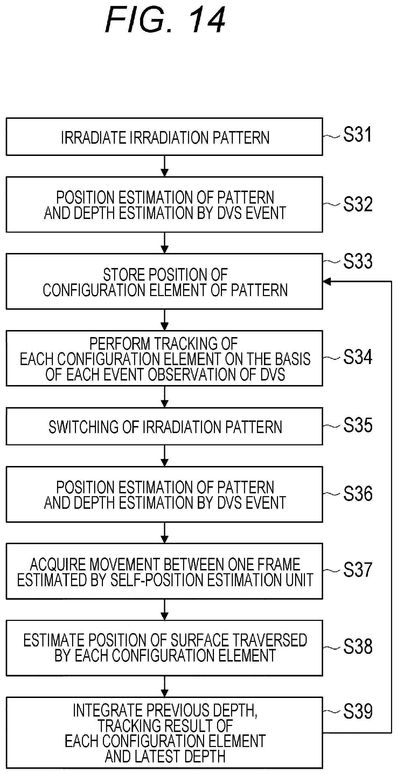

Next, functional details of the information processing system 3 according to the third embodiment of the present disclosure will be described with reference to Fig. 14 (with reference to Figs. 12 and 13 as appropriate). Fig. 14 is a flowchart illustrating an example of an operation of the information processing system 3 according to the third embodiment of the present disclosure.

### (Irradiation with irradiation light)

The irradiation control unit 138 controls the irradiator 40 such that the first pattern among the plurality of mutually different patterns is irradiated as an irradiation pattern by the irradiator 40 (S31). More specifically, the irradiation control unit 135 outputs an irradiation instruction signal for instructing irradiation of the first pattern to the irradiator 40. However, in the third embodiment of the present disclosure, the irradiation pattern is later switched to a second pattern different from the first pattern among the plurality of patterns.

Subsequently, S32 to S34 are executed similarly to the corresponding processing (S22 to S24) in the second embodiment of the present disclosure.

### (Switching of irradiation light)

The irradiation control unit 135 controls the irradiator 40 such that the irradiation pattern is switched to a second pattern different from the first pattern among the plurality of patterns by the irradiator 40 (S35). More specifically, the irradiation control unit 135 outputs a switching instruction signal for instructing pattern switching to the irradiator 40. By such pattern switching, it is possible to increase the time in which the event of the luminance change greater than or equal to a threshold value can occur as compared with the case where the pattern is stopped.

Subsequently, S36 to S39 are executed similarly to the corresponding processing (S26 to S29) in the second embodiment of the present disclosure. When S39 ends, the operation proceeds to S33, and the processing after S33 (processing similar to the processing related to the first and second frames described above) is continuously executed for the second and third frames.

At this time, in S35, the irradiation control unit 138 may control the irradiator 40 so that the irradiation pattern can be switched from the second pattern to the first pattern. Alternatively, in a case where three or more patterns are prepared in advance, the irradiator 40 may be controlled so that the irradiation pattern can be switched from the second pattern to the third pattern.

The functional details of the information processing system 3 according to the third embodiment of the present disclosure have been described above.

### (3.4. Summary of third embodiment)

As described above, in the third embodiment of the present disclosure, the irradiation control unit 138 controls the irradiator 40 to switch the irradiation pattern among a plurality of mutually different patterns. According to such a configuration, it is possible to increase the time in which the event of the luminance change of the threshold value or more can occur. Then, since the depth information is estimated more frequently on the basis of the position of the pixel where the luminance change greater than or equal to the threshold value has occurred, it is possible to obtain the three-dimensional information at a higher speed. Furthermore, as in the third embodiment of the present disclosure, since it is not necessary to use the normal camera, the cost for providing the normal camera can be reduced.

The third embodiment of the present disclosure has been described above.

### <4. Hardware configuration example>

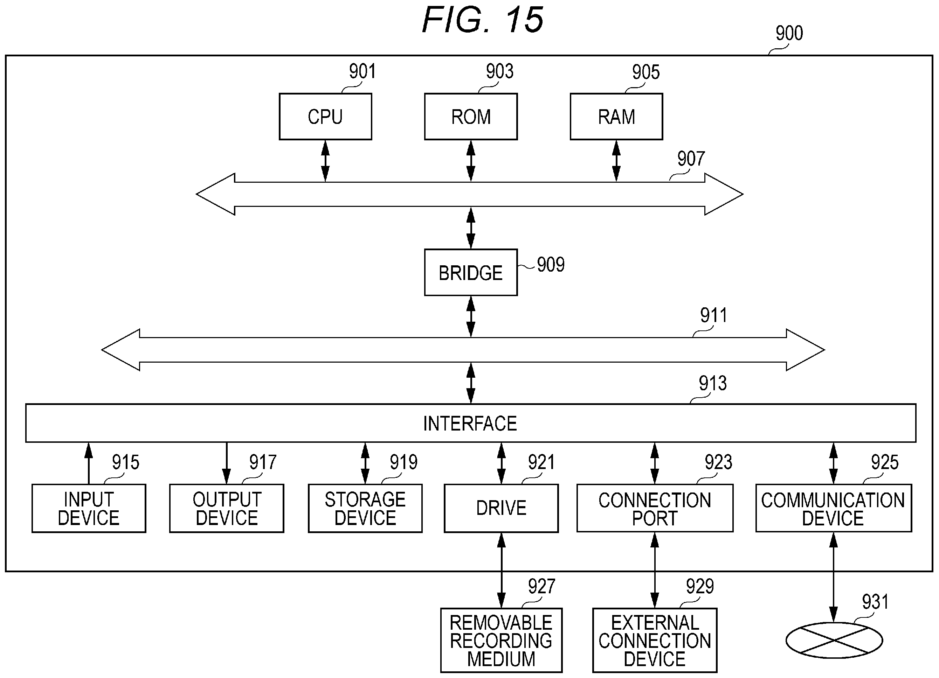

Next, a hardware configuration example of the information processing apparatus 10 as an example of an information processing apparatus 900 according to the first embodiment of the present disclosure will be described with reference to Fig. 15. Fig. 15 is a block diagram illustrating a hardware configuration example of the information processing apparatus 900. Note that the information processing apparatus 10 does not necessarily have the entire hardware configuration illustrated in Fig. 15, and a part of the hardware configuration illustrated in Fig. 15 may not exist in the information processing apparatus 10. Furthermore, a hardware configuration of each of the information processing apparatus 12 according to the second embodiment of the present disclosure and the information processing apparatus 13 according to the third embodiment of the present disclosure may be realized similarly to the hardware configuration of the information processing apparatus 10.

As illustrated in Fig. 15, the information processing apparatus 900 includes a central processing unit (CPU) 901, a read only memory (ROM) 903, and a random access memory (RAM) 905. Furthermore, the information processing apparatus 900 may include a host bus 907, a bridge 909, an external bus 911, an interface 913, an input device 915, an output device 917, a storage device 919, a drive 921, a connection port 923, and a communication device 925. The information processing apparatus 900 may include a processing circuit called a digital signal processor (DSP) or an application specific integrated circuit (ASIC) instead of or in addition to the CPU 901.

The CPU 901 functions as an arithmetic processing device and a control device, and controls the overall operation or a part of the operation in the information processing apparatus 900 according to various programs recorded in the ROM 903, the RAM 905, the storage device 919, or a removable recording medium 927. The ROM 903 stores programs, operation parameters, and the like used by the CPU 901. The RAM 905 temporarily stores programs used in the execution of the CPU 901, parameters that appropriately change in the execution, and the like. The CPU 901, the ROM 903, and the RAM 905 are mutually connected by the host bus 907 including an internal bus such as a CPU bus. Moreover, the host bus 907 is connected to the external bus 911 such as a peripheral component interconnect/interface (PCI) bus via the bridge 909.

The input device 915 is, for example, a device operated by the user, such as a button. The input device 915 may include a mouse, a keyboard, a touch panel, a switch, a lever, and the like. Furthermore, the input device 915 may include a microphone that detects the user's voice. The input device 915 may be, for example, a remote control device using infrared rays or other radio waves, or an external connection device 929 such as a mobile phone corresponding to the operation of the information processing apparatus 900. The input device 915 includes an input control circuit that generates an input signal on the basis of information input by the user and outputs the input signal to the CPU 901. The user operates the input device 915 to input various types of data to the information processing apparatus or instruct the information processing apparatus 900 to perform a processing operation. Furthermore, an imaging device 933 to be described later can also function as an input device by imaging the movement of the user's hand, the user's finger, and the like. At this time, the pointing position may be determined according to the movement of the hand or the direction of the finger.

The output device 917 includes a device capable of visually or aurally notifying the user of the acquired information. The output device 917 can be, for example, a display device such as a liquid crystal display (LCD) or an organic electro-luminescence (EL) display, a sound output device such as a speaker or a headphone, and the like. Furthermore, the output device 917 may include a plasma display panel (PDP), a projector, a hologram, a printer device, and the like. The output device 917 outputs a result obtained by the processing of the information processing apparatus 900 as a video such as a text or an image, or as a sound such as voice or audio. Furthermore, the output device 917 may include a light or the like to brighten the surroundings.

The storage device 919 is a data storage device configured as an example of a storage unit of the information processing apparatus 900. The storage device 919 includes, for example, a magnetic storage device such as a hard disk drive (HDD), a semiconductor storage device, an optical storage device, a magneto-optical storage device, or the like. The storage device 919 stores programs executed by the CPU 901, various data, various data acquired from the outside, and the like.

The drive 921 is a reader and writer for a removable recording medium 927 such as a magnetic disk, an optical disk, a magneto-optical disk, or a semiconductor memory, and is built in or externally attached to the information processing apparatus 900. The drive 921 reads information recorded in the attached removable recording medium 927 and outputs the information to the RAM 905. Furthermore, the drive 921 writes a record in the attached removable recording medium 927.

The connection port 923 is a port for directly connecting a device to the information processing apparatus 900. The connection port 923 may be, for example, a universal serial bus (USB) port, an IEEE 1394 port, a small computer system interface (SCSI) port, and the like. Furthermore, the connection port 923 may be an RS-232C port, an optical audio terminal, a high-definition multimedia interface (HDMI) (registered trademark) port, and the like. By connecting the external connection device 929 to the connection port 923, various data can be exchanged between the information processing apparatus 900 and the external connection device 929.

The communication device 925 is, for example, a communication interface including a communication device or the like for connecting to the network 931. The communication device 925 may be, for example, a communication card for wired or wireless local area network (LAN), Bluetooth (registered trademark), or wireless USB (WUSB). Furthermore, the communication device 925 may be a router for optical communication, a router for asymmetric digital subscriber line (ADSL), a modem for various types of communication, or the like. The communication device 925 transmits and receives signals and the like to and from the Internet and other communication devices, for example, using a predetermined protocol such as TCP/IP. Furthermore, the network 931 connected to the communication device 925 is a network connected in a wired or wireless manner, and is, for example, the Internet, a home LAN, infrared communication, radio wave communication, satellite communication, or the like.

### <5. Various modification examples>

Although the preferred embodiments of the present disclosure have been described in detail with reference to the accompanying drawings, the technical scope of the present disclosure is not limited to such examples. It is obvious that a person having ordinary knowledge in the technical field of the present disclosure can conceive various change examples or modification examples within the scope of the technical idea described in the claims, and it is naturally understood that these also belong to the technical scope of the present disclosure.

### (Stereo camera system)

For example, in the first embodiment of the present disclosure to the third embodiment of the present disclosure, the case where the pattern whose irradiation position is known is used has been mainly described as an example of the irradiation light irradiated by the irradiator 40. That is, the case where the structured light method is used has been mainly described. However, as the irradiation light irradiated by the irradiator 40, irradiation light whose irradiation position is not known may be irradiated by the irradiator 40. That is, the structured light method may not be used. In such a case, the camera used in each embodiment may be a stereo camera.

For example, in the first embodiment of the present disclosure, two IR cameras 30 as examples of normal cameras may be used. More specifically, it is assumed that a positional relationship between two IR cameras 30 is grasped in advance by the control unit 130.

At this time, the depth information estimating unit 132 can estimate the depth information (second depth information) by triangulation on the basis of the detection position (third detection position) of the irradiation light in the frame output from the first IR camera 30 (third sensor), the detection position (fourth detection position) of the irradiation light in the frame output from the second IR camera 30, and the positional relationship between the two IR cameras 30.

Furthermore, in the first to third embodiments of the present disclosure, two DVS cameras 20 may be used. More specifically, it is assumed that a positional relationship between the two DVS cameras 20 is grasped in advance by the control unit 130.

At this time, in the first embodiment of the present disclosure, the depth information estimating unit 132 can estimate the depth information (first depth information) by triangulation on the basis of the detection position (first detection position) of the irradiation light by the irradiator 40 output from the first DVS camera 20 (first sensor) that detects the position where the luminance change of the first threshold value or more has occurred, the detection position (second detection position) of the irradiation light by the irradiator 40 output from the second DVS camera 20 (second sensor) that detects the position where the luminance change of the second threshold value or more has occurred, and the positional relationship between the two DVS cameras 20.

Also in the second embodiment of the present disclosure and the third embodiment of the present disclosure, the depth information estimating unit 136 can estimate the depth information (first depth information) by triangulation on the basis of the detection position (first detection position) of the irradiation light by the irradiator 40 output from the first DVS camera 20 (first sensor) that detects the position where the luminance change of the first threshold value or more has occurred, the detection position (second detection position) of the irradiation light by the irradiator 40 output from the second DVS camera 20 (second sensor) that detects the position where the luminance change of the second threshold value or more has occurred, and the positional relationship between the two DVS cameras 20.

### (Response to animal body)

The first embodiment of the present disclosure mainly assumes a case where the information processing system 1 is moved. However, the information processing system 1 may be fixed and used at the same place without being moved. Similarly, also in the second embodiment of the present disclosure, the information processing system 2 may be fixed and used at the same place without being moved, and also in the third embodiment of the present disclosure, the information processing system 3 may be fixed and used at the same place without being moved.

In such a case, depth information of a surface of an animal body can be estimated. At this time, the tracking of the configuration elements irradiated by the irradiator 40 can be used to complement the change in depth in each pixel between the plurality of frames. As a result, the update of the depth can be executed at high speed. When the depth information is estimated in this manner, the integrated processing unit 133 performs processing of adding the depth information at each of the plurality of times.

Furthermore, the effects described in the present specification are merely illustrative or exemplary, and are not restrictive. That is, the technology according to the present disclosure can exhibit other effects obvious to those skilled in the art from the description of the present specification together with or instead of the effects described above.

Note that the following configurations also belong to the technical scope of the present disclosure.
(1) An information processing apparatus including:
   a depth information estimating unit that estimates first depth information on the basis of a first detection position of irradiation light by an irradiator, the first detection position being output from a first sensor that detects a position where a luminance change greater than or equal to a first threshold value has occurred; and
   an integrated processing unit that estimates three-dimensional information on the basis of the first depth information and position and orientation information of the first sensor at each of a plurality of times.
(2) The information processing apparatus recited in (1) described above, in which
   in a case where there is a disappearance point where irradiation light is not detected by the first sensor, the integrated processing unit executes predetermined processing related to the disappearance point.
(3) The information processing apparatus recited in (2) described above, in which
   the integrated processing unit performs processing of associating information indicating that a shape is indefinite with the disappearance point as the predetermined processing related to the disappearance point.
(4) The information processing apparatus recited in (2) described above, in which
   in a case where there is a detection point where irradiation light is detected at a position adjacent to the disappearance point, the integrated processing unit performs, as the predetermined processing related to the disappearance point, complementary processing of complementing information of a shape corresponding to the disappearance point on the basis of information of a shape corresponding to the detection point.
(5) The information processing apparatus recited in (4) described above, in which
   the complementary processing includes processing of estimating an inclination of a shape corresponding to the disappearance point such that an angle formed by an inclination of a shape corresponding to the detection point and an inclination of a shape corresponding to the disappearance point is greater than or equal to a predetermined angle.
(6) The information processing apparatus recited in (4) or (5) described above, in which
   the complementary processing includes processing of estimating a position of a shape corresponding to the disappearance point such that a position of a shape corresponding to the detection point and a position of a shape corresponding to the disappearance point are continuous.
(7) The information processing apparatus recited in any one of (1) to (6) described above, in which
   the irradiator performs switching between irradiation and stop of the irradiation light.
(8) The information processing apparatus recited in any one of (1) to (6) described above, in which
   the irradiator switches an irradiation pattern among a plurality of patterns different from each other.
(9) The information processing apparatus recited in any one of (1) to (8) described above, in which
   the depth information estimating unit estimates the first depth information on the basis of the first detection position, an irradiation position of irradiation light with reference to the irradiator, and a positional relationship between the first sensor and the irradiator.
(10) The information processing apparatus recited in any one (1) to (8) described above, in which
   the depth information estimating unit estimates the first depth information on the basis of the first detection position, a second detection position of irradiation light by the irradiator, and a positional relationship between the first sensor and a second sensor, the second detection position being output from the second sensor that detects a position where a luminance change greater than or equal to a second threshold value has occurred.
(11) The information processing apparatus recited in (1) described above, in which
   the depth information estimating unit estimates second depth information on the basis of a third detection position of irradiation light by the irradiator, the third detection position being detected on the basis of a captured image output from a third sensor, and
   the integrated processing unit performs integration processing on the basis of the first depth information and the second depth information.
(12) The information processing apparatus recited in (11) described above, in which
   the integration processing includes processing of estimating three-dimensional information on the basis of the first depth information, the second depth information, position and orientation information of the first sensor, and position and orientation information of the third sensor.
(13) The information processing apparatus recited in (11) or (12) described above, in which
   the depth information estimating unit estimates the second depth information on the basis of the third detection position, an irradiation position of irradiation light with reference to the irradiator, and a positional relationship between the third sensor and the irradiator.
(14) The information processing apparatus recited in (11) or (12) described above, in which
   the depth information estimating unit estimates the second depth information on the basis of the third detection position and a fourth detection position of irradiation light by the irradiator, the fourth detection position being detected on the basis of a captured image output from a fourth sensor.
(15) An information processing method including:
   estimating first depth information on the basis of a first detection position of irradiation light by an irradiator, the first detection position being output from a first sensor that detects a position where a luminance change greater than or equal to a first threshold value has occurred; and
   estimating, by a processor, three-dimensional information on the basis of the first depth information and position and orientation information of the first sensor at each of a plurality of times.
(16) A program for causing a computer to function as an information processing apparatus including:
   a depth information estimating unit that estimates first depth information on the basis of a first detection position of irradiation light by an irradiator, the first detection position being output from a first sensor that detects a position where a luminance change greater than or equal to a first threshold value has occurred; and
   an integrated processing unit that estimates three-dimensional information on the basis of the first depth information and position and orientation information of the first sensor at each of a plurality of times.

### REFERENCE SIGNS LIST

- 1 to 3: Information processing system
- 10, 12, 13: Information processing apparatus
- 130: Control unit
- 131, 135, 138: Irradiation control unit
- 132, 136: Depth information estimating unit
- 133: Integrated processing unit
- 134: Recording control unit
- 150: Storage unit
- 20: DVS camera
- 30: IR camera
- 40: Irradiator
- 50: Self-position estimation unit
- 70: Object
- 81: Disappearance point
- 82: Detection point
- 83: Detection point

## Claims

1. An information processing apparatus comprising:
a depth information estimating unit that estimates first depth information based on a first detection position of irradiation light by an irradiator, the first detection position being output from a first sensor that detects a position where a luminance change greater than or equal to a first threshold value has occurred; and
an integrated processing unit that estimates three-dimensional information based on the first depth information and position and orientation information of the first sensor at each of a plurality of times.

2. The information processing apparatus according to claim 1, wherein
in a case where there is a disappearance point where irradiation light is not detected by the first sensor, the integrated processing unit executes predetermined processing related to the disappearance point.

3. The information processing apparatus according to claim 2, wherein
the integrated processing unit performs processing of associating information indicating that a shape is indefinite with the disappearance point as the predetermined processing related to the disappearance point.

4. The information processing apparatus according to claim 2, wherein
in a case where there is a detection point where irradiation light is detected at a position adjacent to the disappearance point, the integrated processing unit performs, as the predetermined processing related to the disappearance point, complementary processing of complementing information of a shape corresponding to the disappearance point based on information of a shape corresponding to the detection point.

5. The information processing apparatus according to claim 4, wherein
the complementary processing includes processing of estimating an inclination of a shape corresponding to the disappearance point such that an angle formed by an inclination of a shape corresponding to the detection point and an inclination of a shape corresponding to the disappearance point is greater than or equal to a predetermined angle.

6. The information processing apparatus according to claim 4, wherein
the complementary processing includes processing of estimating a position of a shape corresponding to the disappearance point such that a position of a shape corresponding to the detection point and a position of a shape corresponding to the disappearance point are continuous.

7. The information processing apparatus according to claim 1, wherein
the irradiator performs switching between irradiation and stop of the irradiation light.

8. The information processing apparatus according to claim 1, wherein
the irradiator switches an irradiation pattern among a plurality of patterns different from each other.

9. The information processing apparatus according to claim 1, wherein
the depth information estimating unit estimates the first depth information based on the first detection position, an irradiation position of irradiation light with reference to the irradiator, and a positional relationship between the first sensor and the irradiator.

10. The information processing apparatus according to claim 1, wherein
the depth information estimating unit estimates the first depth information based on the first detection position, a second detection position of irradiation light by the irradiator, and a positional relationship between the first sensor and a second sensor, the second detection position being output from the second sensor that detects a position where a luminance change greater than or equal to a second threshold value has occurred.

11. The information processing apparatus according to claim 1, wherein
the depth information estimating unit estimates second depth information based on a third detection position of irradiation light by the irradiator, the third detection position being detected based on a captured image output from a third sensor, and
the integrated processing unit performs integration processing based on the first depth information and the second depth information.

12. The information processing apparatus according to claim 11, wherein
the integration processing includes processing of estimating three-dimensional information based on the first depth information, the second depth information, position and orientation information of the first sensor, and position and orientation information of the third sensor.

13. The information processing apparatus according to claim 11, wherein
the depth information estimating unit estimates the second depth information based on the third detection position, an irradiation position of irradiation light with reference to the irradiator, and a positional relationship between the third sensor and the irradiator.

14. The information processing apparatus according to claim 11, wherein
the depth information estimating unit estimates the second depth information based on the third detection position and a fourth detection position of irradiation light by the irradiator, the fourth detection position being detected based on a captured image output from a fourth sensor.

15. An information processing method comprising:
estimating first depth information based on a first detection position of irradiation light by an irradiator, the first detection position being output from a first sensor that detects a position where a luminance change greater than or equal to a first threshold value has occurred; and
estimating, by a processor, three-dimensional information based on the first depth information and position and orientation information of the first sensor at each of a plurality of times.

16. A program for causing a computer to function as an information processing apparatus comprising:
a depth information estimating unit that estimates first depth information based on a first detection position of irradiation light by an irradiator, the first detection position being output from a first sensor that detects a position where a luminance change greater than or equal to a first threshold value has occurred; and
an integrated processing unit that estimates three-dimensional information based on the first depth information and position and orientation information of the first sensor at each of a plurality of times.
